# EUROPEAN PATENT APPLICATION

(11) **EP 4 589 491 A1**
(43) Date of publication of application: **23.07.2025**
(21) Application number: 23868217.3
(22) Date of filing: 20.09.2023
(51) Int. Cl.: G06N 20/00, G06N 3/098

(54) **INFORMATION PROCESSING SYSTEM, INFORMATION PROCESSING METHOD, AND PROGRAM**

(30) Priority: 20.09.2022 JP 2022149423
(71) Applicant: Morgenrot Inc., Tokyo 102-0083 (JP)
(72) Inventor: NAKAMURA Masamichi, Tokyo 107-0052 (JP); NISHIMOTO Masakazu, Tokyo 107-0052 (JP); INOUE Hirotaka, Tokyo 107-0052 (JP)
(74) Representative: Appleyard Lees IP LLP
(86) International application number: PCT/JP2023/034117
(87) International publication number: WO 2024/063096

(57) **Abstract**

The present invention improves the convenience of a process on a system while preventing the leakage of information. A user terminal 2 performs, from prescribed information (shape data of a three-dimensional airfoil), part of a prescribed process (such as a process for generating feature amount data by making a conversion into a feature amount in which the coordinate values of a plurality of points necessary for generating a curve of the cross section of the three-dimensional airfoil are arranged) and transmits (outputs), to a server 1, output information (feature amount data) indicative of the result of the performance. The output information is feature amount data or the like, and is in a form so that it is impossible to reproduce the prescribed information only with the data. The server 1 includes a decoding unit 61. The decoding unit 61 uses the feature amount data acquired from the user terminal 2 to perform a remaining part of the prescribed process (a process for obtaining a performance parameter of the three-dimensional airfoil from the feature amount data).

## Description

### TECHNICAL FIELD

The present invention relates to an information processing system, an information processing method, and a program.

### BACKGROUND ART

Conventionally, there has been a technology that uses cloud-based servers to perform learning and inference with regard to predetermined processing. For example, Patent Document 1 describes a technology that uses a cloud-based accounting processing device to generate a trained model for an accounting processing service, and that performs determination by using the trained model.

### Citation List

### Patent Document

Patent Document 1: Japanese Unexamined Patent Application, Publication No. 2018-97813

### DISCLOSURE OF THE INVENTION

### Problems to be Solved by the Invention

However, there are some cases where transmission of data for learning and inference to another information processing system, such as a cloud-based server, is not permitted by law, or by request within a company. In other words, improvement in usability, in the context of requests regarding data handling, is required of conventional platforms for learning and inference.

The present invention has been made in view of such circumstances, and an object thereof is to improve the usability of system-based processing, while preventing leakage of information.

### Means for Solving the Problems

To achieve the object, an information processing system as one aspect of the present invention is an information processing system including: a first information processing device that executes part of predetermined processing; and a second information processing device that executes a part of remaining processing of the predetermined processing, wherein
the first information processing device includes a first execution section that executes the part of the predetermined processing, using predetermined information for input information, and outputs output information indicating an execution result thereof, in a form in which the predetermined information is unreproducible only with the output information, and
the second information processing device includes an acquisition section that acquires the output information from the first information processing device, and a second execution section that executes the part of the remaining processing of the predetermined processing, using the output information for input information.

An information processing method and a program each as another aspect of the present invention are an information processing method and a program corresponding to the above-described information processing device as one aspect of the present invention, respectively.

### Effects of the Invention

According to the present invention, it is possible to improve the usability of system-based processing, while preventing leakage of information.

### BRIEF DESCRIPTION OF THE DRAWINGS

FIG. 1 shows an example of a system configuration of one embodiment of an information processing system according to the present invention;
FIG. 2 shows an example of a hardware configuration of a server in the information processing system in FIG. 1;
FIG. 3 is a functional block diagram showing an example of a functional configuration of the information processing system including the server having the hardware configuration shown in FIG. 2;
FIG. 4 is a flowchart showing operation in the information processing system having the hardware configuration in FIG. 2 and the functional configuration in FIG. 3;
FIG. 5 shows predetermined processing in the information processing system having the hardware configuration in FIG. 2 and the functional configuration in FIG. 3;
FIG. 6 shows a scenario in which the predetermined processing in FIG. 5 is divided into processing on a user terminal side and processing on a server side and executed;
FIG. 7 shows an example of a learning process by a neural network in the information processing system in FIG. 3;
FIG. 8 shows an example of a process of extracting a feature from original data, in the information processing system in FIG. 3;
FIG. 9 shows an example of a process of converting a plurality of features extracted from different cross-sections through the process in FIG. 8 into a matrix;
FIG. 10 shows another example of the process in FIG. 6 and shows an example of a process of converting something other than geometry data, for example the flow field of an air current, into features;
FIG. 11 shows an embodiment in a case where feature data is extracted by using a neural network with a large number of layers, in the information processing system according to the present invention;
FIG. 12 shows an embodiment in a case where a learning phase of the neural network is performed by three networks, in the information processing system according to the present invention;
FIG. 13 shows an embodiment in a case where each of a plurality of layers of a learning part, or the learning part itself, is disposed in a different server in a distributed manner, in the information processing system according to the present invention; and
FIG. 14 shows an embodiment in which the processing is divided at a different place from the example in FIG. 6, in the information processing system according to the present invention.

### PREFERRED MODE FOR CARRYING OUT THE INVENTION

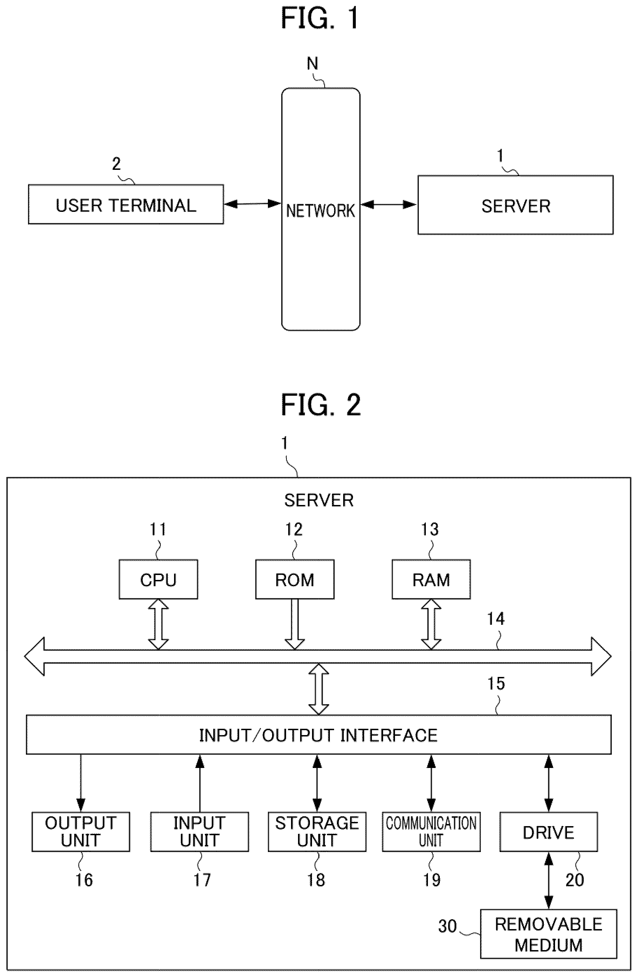

Hereinafter, an embodiment of the present invention is described with reference to the drawings. First, with reference to FIG. 1, a system configuration of one embodiment of an information processing system according to the present invention is described. FIG. 1 shows an example of the system configuration of the information processing system in the one embodiment according to the present invention.

The information processing system in FIG. 1 is configured to include a server 1 and a user terminal 2. The server 1 and the user terminal 2 are communicably connected to each other via a predetermined network N, such as the Internet. Note that a form of the network N is not particularly limited, and for example, Bluetooth(R), Wi-Fi, a LAN (Local Area Network), the Internet, or the like can be adopted. In the information processing system, predetermined processing, for example, processing for analyzing the flow of an air current around geometry data on a three-dimensional airfoil and simulating (modeling) the flow field of the air current, or the like, is executed through communication between the server 1 and the user terminal 2 via the network N.

The server 1 is an information processing device managed by a service provider, for example, a smartphone, a tablet terminal, a personal computer (PC), or the like, and a server app provided by the service provider is installed therein. The server 1 executes remaining processing, of the predetermined processing, at the request of a user. Specifically, while communicating with the user terminal 2 as appropriate, the server 1 executes, as the remaining processing, various control processes including, for example, a process of generating the curve of a cross-section of a pseudo-geometry of a three-dimensional airfoil from feature data received from the user terminal 2, and generating a performance parameter indicating the magnitude of resistance of an air current to the geometry of the cross-section, or simulating (modeling) the flow field of the air current according to the performance parameter.

The user terminal 2 is, for example, a terminal that receives an operation performed by a user and is an information processing device, such as a smartphone, a tablet terminal, or a personal computer (PC). A user app provided by the service provider is installed in the user terminal 2. The user terminal 2 executes partial processing of the predetermined processing. Specifically, while communicating with the server 1 as appropriate, the user terminal 2 executes, as the partial processing of the predetermined processing, for example, a process of extracting feature data from geometry data stored in the user terminal 2, and the like.

Note that in the present embodiment, as an example of cooperation between the user terminal 2 and the server 1, for example, a first scheme in which the user terminal 2 and the server 1 install the respective dedicated apps provided by the service provider and execute the processing through the apps is adopted for a "cooperation" scheme. As another one, for example, a second scheme may be adopted in which the user terminal 2 accesses a website disclosed by the server 1 and displays the website. In the second scheme, the user terminal 2 executes the partial processing of the predetermined processing, and has the remaining processing executed by the server 1 while communicating with the server 1 as appropriate. As described above, a scheme for accomplishing the present service through cooperation between the user terminal 2 and the server 1 is not limited only to the first scheme. For example, a scheme in which the first scheme and the second scheme are combined as appropriate can also be adopted for a "cooperation" scheme. However, in examples below, a description is given assuming that the first scheme is adopted for a "cooperation" scheme, for convenience of description. In other words, in examples below, those parts where the actor of a process is the server 1 are only illustrative, and it is needless to say that the actor of the process may be the user terminal 2 or another information processing device (the server 1 or the like) as appropriate in implementation.

In the present example, a hardware configuration of the server 1 is described below, with attention focused on the server 1 in the information processing system in FIG. 1.

First, a description is given of an example of the hardware configuration of the server included in the information processing system described using FIG. 2. FIG. 2 shows the example of the hardware configuration of the server in the information processing system in FIG. 1.

The server 1 includes a CPU (Central Processing Unit) 11, a ROM (Read Only Memory) 12, a RAM (Random Access Memory) 13, a bus 14, an input/output interface 15, an output unit 16, an input unit 17, a storage unit 18, a communication unit 19, and a drive 20.

The CPU 11 executes various processes according to programs recorded on the ROM 12, or programs loaded from the storage unit 18 onto the RAM 13. Data and the like required when the CPU 11 executes the various processes are also stored in the RAM 13 as appropriate.

The CPU 11, the ROM 12, and the RAM 13 are connected to each other via the bus 14. The input/output interface 15 is also connected to the bus 14. The output unit 16, the input unit 17, the storage unit 18, the communication unit 19, and the drive 20 are connected to the input/output interface 15.

The output unit 16 includes a display, such as a liquid crystal display device, as well as a printer, a speaker, and the like, from which various kinds of information are outputted. The input unit 17 includes input devices, such as a keyboard and a mouse, with which various kinds of information are inputted. The storage unit 18 includes a DRAM (Dynamic Random Access Memory) or the like and stores various kinds of data. The communication unit 19 performs communication with other devices through the network N including the Internet.

A removable medium 30, such as a magnetic disk, an optical disk, a magneto-optic disk, or a semiconductor memory, is attached to the drive 20 as appropriate. A program read by the drive 20 from the removable medium 30 is installed in the storage unit 18 as necessary. The removable medium 30 can also store the various kinds of data stored in the storage unit 18, similarly to the storage unit 18. Although the hardware configuration of the server 1 is described above, a hardware configuration of the user terminal 2 is also similar, and a description thereof is omitted.

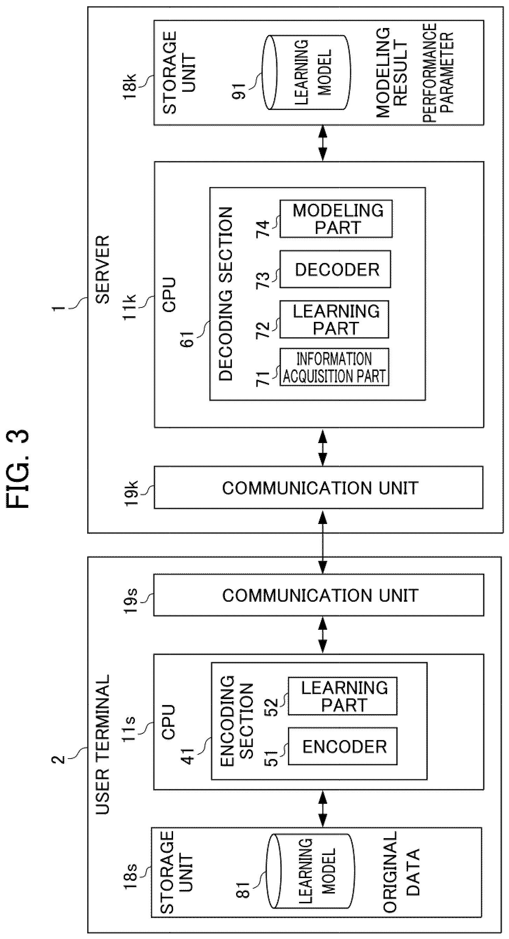

Next, with reference to FIG. 3, a description is given of a functional configuration of the information processing system including the server having the hardware configuration in FIG. 2. FIG. 3 is a functional block diagram showing an example of the functional configuration of the information processing system including the server having the hardware configuration shown in FIG. 2. Note that in a description below, a hardware element of the server 1 is described with the suffix "k", and a hardware element of the user terminal 2 is described with the suffix "s", to make a distinction between hardware of the server 1 and hardware of the user terminal 2.

As shown in FIG. 3, a learning model 81, in addition to original data as a processing target, is stored in the storage unit 18s of the user terminal 2. The CPU 11s of the user terminal 2 functions as an encoding section 41 when the predetermined processing is executed. The encoding section 41 includes an encoder 51 and a learning part 52. The learning part 52 may be integrated into a server-side learning part 72, not disposed on the user terminal 2 side, or vice versa, depending on a way of separation when the predetermined processing is divided.

The encoding section 41 executes part of the predetermined processing, using the processing-target data (original data), such as geometry data on a three-dimensional airfoil, for input information, and outputs output information indicating an execution result thereof, in a form in which predetermined information is unreproducible only with the output information. Here, the predetermined processing is, for example, processing for analyzing an air current around the geometry data on the three-dimensional airfoil and modeling the behavior of the air current, or the like, and processing executed on the user terminal 2 side is part of the predetermined processing and includes, for example, a process of performing conversion from the original data into feature data obtained by conversion into features that are an array of the coordinate values of a plurality of points required to generate the curves of cross-sections of the three-dimensional airfoil. Moreover, unreproducible means that reproduction is impossible within a realistic time period in a state where no information other than the output information is given.

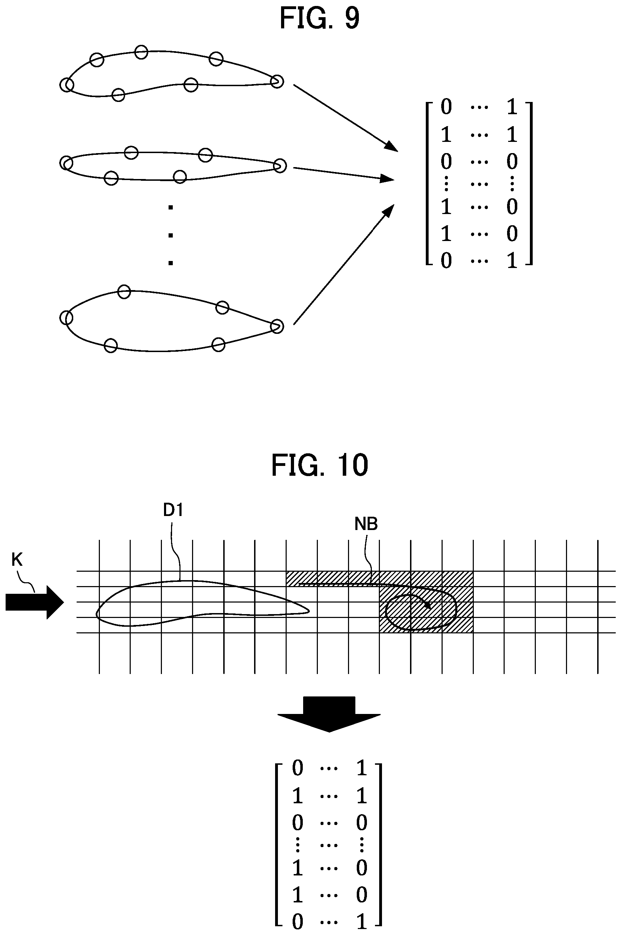

The encoder 51 reads the original data stored in the storage unit 18s, generates "0", "1"-based digital data required to generate the curves of the cross sections of the three-dimensional airfoil from the original data, executes a process of generating the digital data, converts the "0", "1"-based digital data into feature data (a feature matrix) obtained by conversion into features that are an array of the coordinate values of a plurality of points, and outputs the feature data (see FIG. 9).

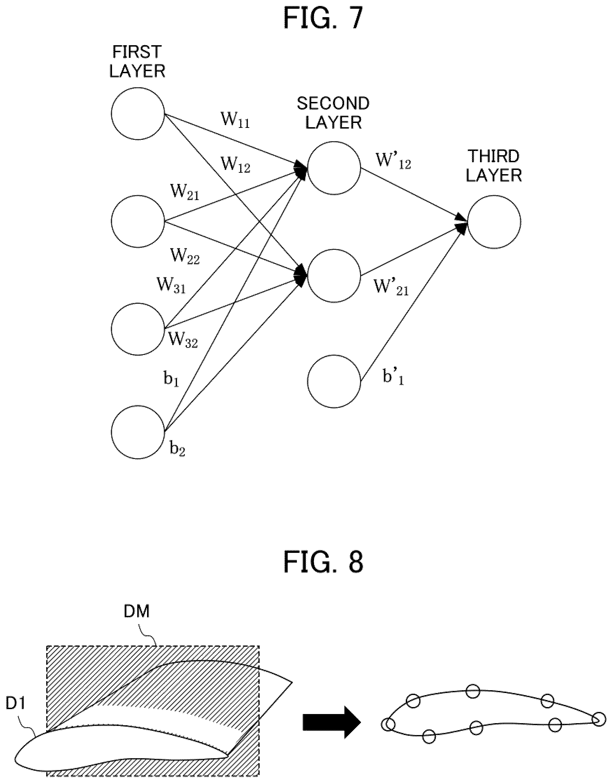

In a learning phase, the learning part 52 trains the learning model 81. In an operation phase, the learning part 52 inputs the feature data (feature matrix) generated by the encoder 51 into the learning model 81, and causes the learning model 81 to output reduced-dimensional feature data. Specifically, using the feature data (feature matrix) generated by the encoder 51 for input information, the learning part 52 executes, for example, a weighting process in a first layer of a three-layer neural network including first to third layers (see FIG. 7) and outputs an execution result thereof (feature data). The output information from the user terminal 2 is the feature data, from which the original data or approximate data thereto is can be reproduced by providing setting information or reproducing means (a dedicated decoder or the like) beforehand on the data server 1 side, and which can be said to be in a form in which the original data is unreproducible only with the feature data.

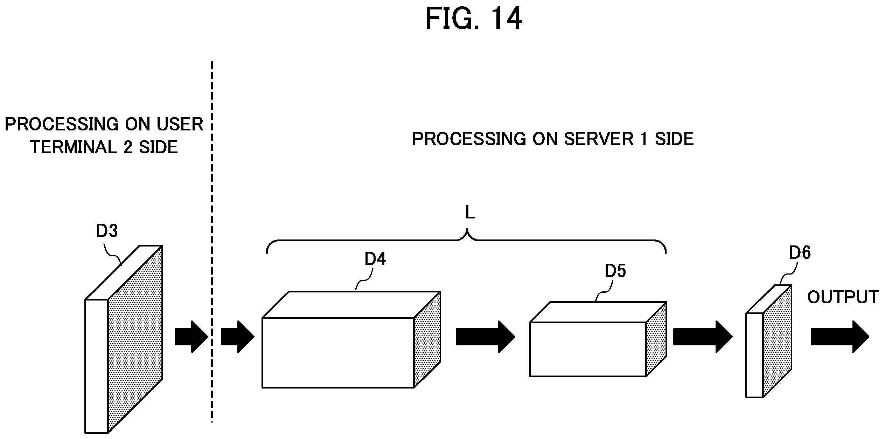

Note that when the original data is assumed to be predetermined information, the output information (for example, the feature data or the like) outputted from the user terminal 2 can be said to be one or more feature data pieces (features) on a target (for example, geometry data on a three-dimensional airfoil, data on a result of analysis of an air current, or the like) indicated by the predetermined information. Although the learning part 52 is disposed at a stage subsequent to the encoder 51, and the output information is a result of learning at an intermediate point in predetermined machine learning (a result only of learning in the first layer) in the embodiment, another configuration may be made. For example, the learning part 52 may output a result of performing learning in the first layer and the second layer. The learning part 52 may be deleted, and an output from the encoder 51 itself may be outputted as output information (see FIG. 14).

The CPU 11k of the server 1 functions as a decoding section 61 when the predetermined processing is executed. An information acquisition part 71, a learning part 72, a decoder 73, and a modeling part 74 function on the decoding section 61.

The decoding section 61 acquires output information transmitted from the user terminal 2 via the Internet and executes the part of the remaining processing of the predetermined processing, using the output information for input information. The part of the remaining processing of the predetermined processing includes, for example, a process of generating the curve of a cross-section DM (see FIG. 8) of a pseudo-geometry of a three-dimensional airfoil D1 from feature data, and generating a performance parameter indicating the magnitude of resistance of an air current to the geometry of the cross-section or modeling the flow field of an air current according to the geometry of the cross-section.

The information acquisition part 71 acquires the output information from the user terminal 2. Specifically, the information acquisition part 71 acquires feature data transmitted from the user terminal 2 and stores the feature data in the storage unit 18k temporarily.

The learning part 72 performs predetermined machine learning using the inputted feature data (training data) and outputs a result of the learning. Specifically, the learning part 72 includes the second layer and the third layer of the three layers, and generates feature data in a state in which the same data as original data existing on the user terminal 2 side is unreproducible, for example by executing processes (processes such as weighting and adding up) on the inputted feature data in the order of the layers. In other words, the predetermined machine learning is learning that uses a learning model 81, 91 (neural network) with N layers (N is an integer value that is equal to or more than two), the output information from the user terminal 2 is output information (a result of learning in the first layer) from a K-th layer (K is an integer value that is equal to or more than one and less than N) of the neural network, and learning in the remaining layers (second layer and third layer) is executed in the server 1, using the result of learning in the first layer for input information. The part of the remaining processing of the predetermined processing is, for example, processing for analyzing the flow of an air current applied in a predetermined direction to geometry data on the three-dimensional airfoil and acquiring a performance parameter, or the like, and includes a process of inputting the training data into the learning model 91 and training the learning model 91 (a process of performing the predetermined machine learning).

The decoder 73 executes a process of reproducing (generating) pseudo-geometry data on the three-dimensional airfoil from a result of the learning by the learning part 72, analyzing the flow of an air current applied in a predetermined direction K to the three-dimensional airfoil, and acquiring the performance parameter, in terms of the flow of the air current, of the three-dimensional airfoil.

The modeling part 74 simulates (models) the flow of the air current applied in the predetermined direction to the three-dimensional airfoil. Specifically, the modeling part 74 simulates a flow field NB created by applying the air current in the predetermined direction K to the pseudo-geometry data on the three-dimensional airfoil generated by the decoder 73 (see FIG. 10). In other words, the predetermined processing includes a process of performing simulation (for example, a process of analyzing the flow of the air current applied in the predetermined direction to the three-dimensional airfoil and modeling the behavior (flow field) of the air current).

As described above, with the information processing system in the embodiment, in execution of the predetermined processing (for example, processing for performing a performance test or the like of a three-dimensional airfoil with data), the user terminal 2 executes part (processing for generating feature data obtained by conversion into features that are an array of the coordinate values of a plurality of points required to generate the curves of cross-sections of a three-dimensional airfoil, or the like) of the predetermined processing from geometry data on the three-dimensional airfoil, and transmits (outputs) the feature data indicating an execution result thereof to the server 1. The feature data is data in a form in which the original data is unreproducible only with the feature data, and even if the feature data is leaked or stolen, the original data cannot be restored only with the feature data. Since the server 1 includes the decoding section 61 and executes the part of the remaining processing of the predetermined processing, using the feature data transmitted from the user terminal 2, the burden of the processing on the user side can be reduced. As a result, it is possible to improve the usability of the system-based processing, while preventing leakage of the original data.

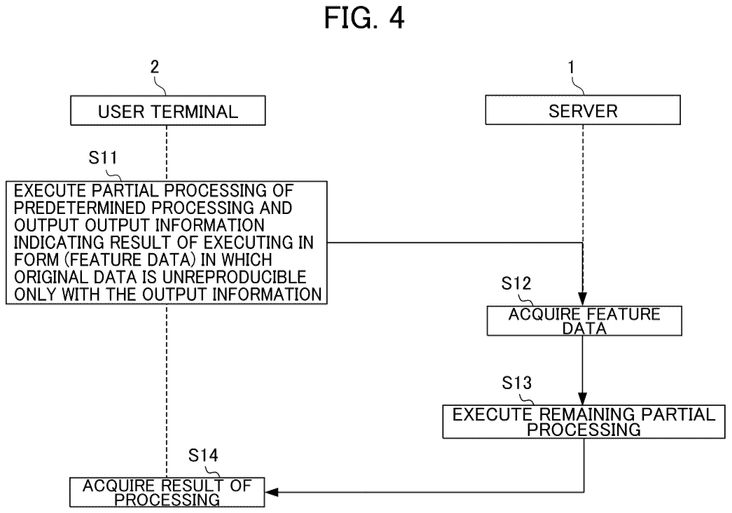

Subsequently, with reference to FIG. 4, operation in the information processing system having the functional configuration in FIG. 3 is described. FIG. 4 is a flowchart showing the operation in the information processing system having the functional configuration in FIG. 3.

In execution of the predetermined processing (for example, processing for performing a performance test or the like of a three-dimensional airfoil with data), in the user terminal 2, the encoding section 41, in step S11, executes part of the processing from geometry data on the three-dimensional airfoil and transmits (outputs) feature data indicating an execution result thereof to the server 1.

In the server 1, the decoding section 61, in step S12, acquires the feature data transmitted from the user terminal 2, and then in step S13, executes the part of the remaining processing of the predetermined processing, using the feature data for input information, and transmits (outputs) an execution result of the predetermined processing to the user terminal 2. The execution result of the predetermined processing is, for example, a performance parameter obtained as an execution result of the process by the decoder 73, a modeling result (simulation result) of modeling the flow field of an air current obtained as an execution result of the process by the modeling part 74, or the like.

When the user terminal 2 receives the execution result of the predetermined processing transmitted from the server 1, the user terminal 2, in step S14, displays the execution result.

As described above, in the operation in the information processing system, part of processing is executed on the user terminal 2 side, and the part of the remaining processing is executed on the server 1 side, whereby while leakage of the original data kept by the user terminal 2 can be prevented, the burden of the processing on the user can be reduced by the user terminal 2 having some processing executed by the server 1.

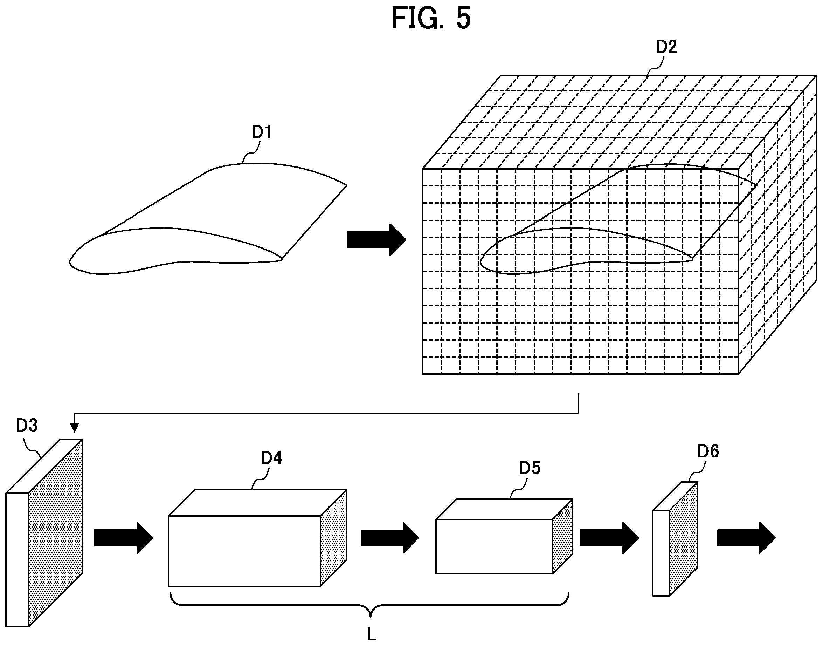

Subsequently, with reference to FIGS. 5 to 14, examples of specific processes in the information processing system are described. First, with reference to FIG. 5, a description is given of an outline of the predetermined processing in a case where a three-dimensional airfoil is assumed as an example of machine geometry, in the information processing system. FIG. 5 is a diagram for describing the outline of the predetermined processing in the case where a three-dimensional airfoil is assumed as an example of machine geometry, in the information processing system having the hardware configuration in FIG. 2 and the functional configuration in FIG. 3.

As shown in FIG. 5, the geometry of the three-dimensional airfoil D1 is inputted as three-dimensional geometry data (original data) into an encoder D3 and converted into "0", "1"-based digital data. When inputted into the learning model, the original data is converted into data represented by voxels, mesh, a function, or the like. In FIG. 5, as an example, the three-dimensional airfoil D1 is divided into cuboid voxels D2. The geometry data as a result of division into voxels D2 is inputted into the machine learning model via the encoder D3. FIG. 5 shows an example of a learning model in an autoencoder including, as an example, the encoder D3 and two layers D4, D5. Apart from the example, for example, a neural network separated from the encoder D3 or a deep neural network may be used, or another learning model, such as a GAN, may be used. An output as a result of the processing can be an image of a flow field, or can be a plurality of parameters, not a performance parameter. There are some cases where an encoder or a decoder does not exist, depending on the model, and geometry data is inputted into a layer portion and an output is obtained. In FIG. 5, the geometry data D2 read from the storage unit 18s is inputted into the layers D4, D5 of the learning model via the decoder D3 and reduced in dimension to features. The features are decoded by the decoder D6 and outputted as a performance parameter. For the outputted performance parameter, a fluid performance, such as resistance, or a structural performance, such as strength, is assumed. Although an example of machine design is illustrated in the above-described processing, application is not limited to the example, and application to, for example, the fields of material, drug discovery, and the like is also possible. In such a case, a parameter is set that is a target of design or development in a field of interest. The predetermined information to be inputted is not limited to geometry data either, and a molecular structure, a chemical formula, or the like may be inputted. The learning model in FIG. 5 is one trained to output a performance parameter in response to geometry data inputted. However, in the operation phase, the performance of a designed geometry is estimated at high speed by using the learning model. When the learning model is used in the actual operation phase, the whole learning model may be downloaded into a local system (for example, the user terminal 2 in FIG. 1, FIG. 3), and learning may be performed in each local system.

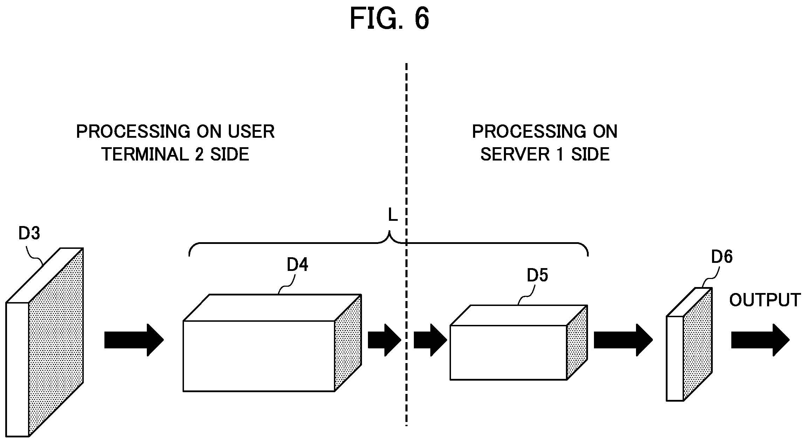

Next, with referenced to FIG. 6, a description is given of a scenario in which the predetermined processing in FIG. 5 is divided (separated) into processing on the user terminal side (local system) and processing on the server side (cloud system) and executed. FIG. 6 shows the scenario in which the predetermined processing in FIG. 5 is divided into processing on the user terminal side (local system) and processing on the server side (cloud system) and executed.

As an example of a case where partial processing of the predetermined processing in FIG. 5 is executed on the user terminal 2 side and the part of the remaining processing is executed on the server 1 side, for example as shown in FIG. 2, the processing from geometry data (design information) on a processing target being inputted into the encoder D3 and inputted into the first layer D4 of the learning model up to feature data being outputted from the first layer D4 of the learning model, that is, the processing up until the geometry data is converted into features by the encoder D3 and the first layer D4 is executed on the user terminal 2 side. For the part of the remaining processing, an example is illustrated in a case where the server 1 acquires the feature data transmitted from the user terminal 2, and in the server 1, the feature data is inputted as input information into the second layer D5 of the learning model, reduced in dimension, and then decoded into pseudo-geometry data by the decoder D6, and a performance parameter of the resultant geometry is outputted. By separating the processing into the user terminal 2 side and the server 1 side as described above, a state is created in which an original specific geometry cannot be restored from values extracted as features, so that if information is leaked to a third party by hacking or the like, a risk of leakage of the geometry data itself is eliminated. Moreover, the abuse of the learning model itself by a third party is difficult unless the specifications of the inputted geometry data is uncovered. Although as an example, the processing is divided (separated) at a place between the first layer D4 and the second layer D5 of the plurality of layers of the learning part in FIG. 6, a place of separation may be any place. For example, the processing may be divided at a place between the encoder D3 and the first layer D4 of the learning part, or may be divided at a place between the second layer D5 and the decoder D6. A place of division may vary, depending on a learning scheme. It suffices that processing in at least a step or steps after conversion into features is performed on a cloud system, such as the server 1.

FIG. 7 is a conceptual diagram of a basic learning model (neural network). When training of the learning model is divided into the user terminal 2 (local system) and the server 1 (cloud system), separation can be made between each layer. As shown in FIG. 7, the neural network in the present example is a three-layer neural network including a first layer, a second layer, and a third layer. Each node is fully coupled to nodes in the next layer. First in the learning phase, data inputted into the neural network is assigned to the nodes in the first layer. Thereafter, values are converted with a weighting function w and a bias b and inputted into the second layer. When the processing is separated at a place between the first layer and the second layer, values after conversion are uploaded from the user terminal 2 (local system) into the server 1 (cloud system), and processing at the second layer and beyond is executed by the server 1. Values in the second layer are converted by non-linear conversion and with a weighting function w' and a bias b', and a result thereof is outputted into the third layer. At the time, when a back-propagation method is used, the weighting function w' and the bias b' in the second layer are updated, then a result thereof is downloaded from the server 1 into the user terminal 2, and the weighting function w and the bias b are updated. A learning model is generated by repeating the above, and in the operation phase, the learning model is used on the user terminal 2. The above scheme is only an example in a case where a neural network is used, and a switch between the user terminal 2 and the server 1 occurs at an intermediate point of processing in the learning model also when a deep neural network, a GAN, or the like is used.

Although the example shown using FIGS. 5 and 6 assume that a plurality of layers is divided at an intermediate point in machine learning, such a configuration is also applied to a workflow including simulation. It is assumed that the target is a machine geometry and that, for example, fluid analysis to find the performance of an airfoil is needed. At the time, with regard to extracted features, it is possible to perform one-dimensional fluid analysis or thermal analysis, or three-dimensional fluid analysis.

For example, in one-dimensional analysis, the analysis is possible without using three-dimensional geometry information on an object that is a design target, even in general cases. Accordingly, by configuring only feature extraction to be performed by the user terminal 2, when analysis thereafter is performed by the server 1, a third party cannot restore design information from information in the server 1.

In a case of three-dimensional analysis, it is necessary to use a learning model in which an analysis scheme is also adapted to the dimensions of features. As an example, in fluid analysis, it is possible to reduce the dimensions of a dominant equation of a flow field by using dynamic mode decomposition or the like. Information on the reduced-dimensional flow field is analyzed and reproduced by the server 1, whereby even if the information on the reduced-dimensional flow field is read by a third party, original data (design information) kept in the user terminal 2 can be prevented from being restored.

Here, with reference to FIGS. 8 and 9, a process of extracting features from original data is described. FIG. 8 is a diagram for describing the process of extracting feature points of original data (geometry data on a three-dimensional airfoil). FIG. 9 shows an example of a process of converting a plurality of features extracted from different cross-sections through the process in FIG. 8 into a matrix.

In conversion of original data (geometry data on a three-dimensional airfoil) into features, it is assumed that a goal is to ultimately find, as a performance parameter, the magnitude of resistance to the three-dimensional airfoil D1 shown in FIG. 8. In such a case, since what affects resistance is two-dimensional cross-section geometry, any cross-section DM is assumed, then with regard to the cross-section DM, points required to generate the curve of the cross-section of the three-dimensional airfoil D1 are extracted, and the coordinate values of the points arranged in a row are extracted as a feature. The coordinate values can also be converted into different values by using a scheme, such as encoding, to make it more difficult for a third party to restore the original geometry.

As shown in FIG. 9, when features are extracted with regard to different cross-sections through the process in FIG. 8, a plurality of features is extracted at the same time. A process of converting the plurality of features into a matrix (feature matrix) is executed. Through the process, efficiency in learning performed on the server 1 is improved, and at the same time, it can be made impossible to restore the original data only with the feature matrix even if the feature matrix is stolen by unauthorized access to the server 1 or the like by a third party.

Here, with reference to FIG. 10, a description is given of an example in which features are extracted from other than geometry data, in the information processing system. FIG. 10 shows an example of a case where the flow field of an air current is converted into features. As one of physical parameters, not geometry data, for example as shown in FIG. 10, an air current, such as wind, is applied in a predetermined direction K to a three-dimensional airfoil D1, and a flow field NB thereof is converted into features. In the example in FIG. 10, when a flow of wind goes from left toward the three-dimensional airfoil D1, the flow is interrupted by the three-dimensional airfoil D1, whereby the air current is made turbulent, and the flow field NB, such as an eddy, occurs. Such a flow field NB can be decomposed into features by using a scheme, such as Proper Orthogonal Decomposition (POD), Dynamic Mode Decomposition (DMD), or Singular Value Decomposition (SVD), and can be expressed ultimately as a matrix. To obtain a performance parameter, it is conceivable to input a physical amount, such as the flow field NB, not a geometry, into the learning part. In such a case, it can also be made impossible to identify the original data (geometry data) from feature data obtained by conversion.

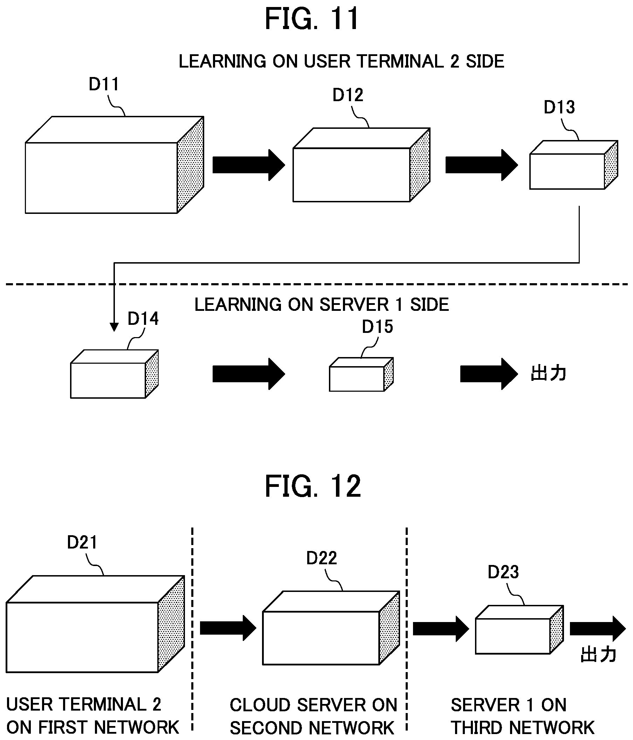

Hereinafter, with reference to FIGS. 11 to 14, other embodiments of the information processing system according to the present invention are described. First, with reference to FIG. 11, a description is given of an embodiment in which feature data is extracted by using a neural network with a large number of layers. FIG. 11 shows the embodiment in the case where feature data is extracted by using a neural network with a large number of layers, in the information processing system according to the present invention. As shown in FIG. 11, the embodiment is an example in which while a three-layer learning part (neural network) including a first layer D11, a second layer D12, and a third layer D13 is disposed in the user terminal 2, a two-layer learning part (neural network) including a fourth layer D14 and a fifth layer D15 is disposed in the server 1.

In the embodiment in FIG. 11, the three-layer learning part (neural network) is used to generate features in the user terminal 2, and generated feature data is inputted into the two-layer learning part (neural network for performance parameter learning) of the server 1. In such a case, first in the user terminal 2, geometry data is inputted into the three-layer learning part (neural network) that generates feature data, and learning is performed such that optimal feature data for learning in the server 1 is outputted, in the first learning phase. In the next operation phase, the three-layer learning part generates feature data by using a trained learning model, and the feature data is uploaded into the server 1. Thereafter, in the server 1, a relation between the feature data inputted into the two-layer learning part and a performance parameter is learned, in a learning phase. In an operation phase, geometry data is inputted as input information, whereby the performance parameter can be estimated from the input information through the combined processes by the learning model generated in the user terminal 2 and a learning model generated in the server 1.

Subsequently, with reference to FIG. 12, a description is given of an embodiment in a case where a learning phase of a neural network is performed by three networks. FIG. 12 shows the embodiment in the case where a learning phase of a neural network is performed by three networks, in the information processing system according to the present invention. As shown in FIG. 12, the information processing system in the embodiment is configured in such a manner that a first layer D21 of the neural network is disposed in the user terminal 2 connected to a first network, a second layer D22 is disposed in a cloud server connected to a second network that is different from the first network, and a third layer D23 is disposed in the server 1 connected to a third network that is different from the second network. When the three different networks are used in a learning phase of the neural network as in the present embodiment, after feature data is generated from input data on the user terminal 2 side, part of learning is processed in the cloud system on another network that is different from the network for the user terminal 2, thereafter the part of the remaining learning is processed in the server 1 connected to another network that is different from the network for the cloud system, and the performance parameter as output information is thus learned.

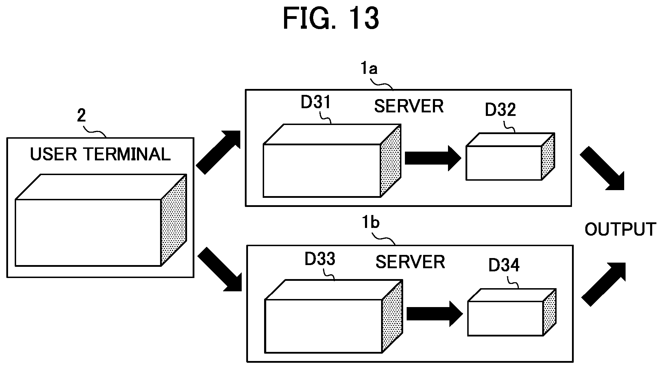

Subsequently, with reference to FIG. 13, a description is given of an embodiment in a case where each of a plurality of layers of a learning part, or the learning part itself, is disposed in a different server in a distributed manner. FIG. 13 shows the embodiment in the case where each of a plurality of layers of a learning part, or the learning part itself, is disposed in a different server in a distributed manner, in the information processing system according to the present invention. As shown in FIG. 13, in the information processing system in the present embodiment, a plurality of servers 1a, 1b is connected to the user terminal 2. A first layer D31 and a second layer D32 of a learning part are disposed in the server 1a. A third layer D33 and a fourth layer D34 of the learning part are disposed in the server 1b. In such a case, when feature data is uploaded into each of the servers 1a, 1b from the user terminal 2, in each of the servers 1a, 1b, a learning process is executed with regard to the uploaded feature data, and a performance parameter (output information) that is an execution result of the process is outputted from each of the servers 1a, 1b. Although the learning process at the learning part is illustrated in the example, the process is not limited to the learning process, and another process may be executed. Each of the servers 1a, 1b may be caused to execute the same process, and respective execution results of the process may be compared.

With such a configuration, since different processes (which may be the same processes) can be executed simultaneously with regard to one set of feature data outputted from the user terminal 2, results of the processes, including process execution conditions, such as timings, can be compared. Note that although processes are separated into two servers 1a, 1b in the example in FIG. 13, the servers are not limited to the two servers 1a, 1b, and processes may be separated into a plurality of servers.

Subsequently, with reference to FIG. 14, a description is given of an embodiment in which the processing is divided at a different place from the example in FIG. 6. FIG. 14 shows the embodiment in which the processing is divided at a different place from the example in FIG. 6, in the information processing system according to the present invention. In the information processing system in the present embodiment, partial processing of the predetermined processing is executed on the user terminal 2 side, and the part of the remaining processing is executed on the server 1 side. Although as an example thereof, the case is described in FIG. 6 where the processing is divided (separated) at a place between the first layer D4 and the second layer D5 of the learning model, another configuration may be made. For example, as shown in FIG. 14, only the encoder D3 may be disposed in the user terminal 2, and the first layer D4 and the second layer D5 of the learning part and the decoder D6 may be disposed in the server 1. In such a case, in the user terminal 2, when geometry data (design information) on a processing target is inputted into the encoder D3, "0", "1"-based digital data is generated from the geometry data by the encoder D3 and outputted to the server 1. In the server 1, the "0", "1"-based digital data transmitted from the user terminal 2 is inputted into the learning part, and the part of the remaining processing is executed. Specifically, in the server 1, when the digital data is inputted into the learning part, processes are executed in the order of the first layer D4 and the second layer D5, and feature data is outputted from the second layer D5 to the decoder D6. At the decoder D6, a pseudo-geometry is restored from the inputted feature data, and a performance parameter, or a modeling result, corresponding to the pseudo-geometry is outputted as output information.

In the example in FIG. 14, the processing is separated into the user terminal 2 side and the server 1 side, at a place between the encoder D3 and the first layer D4 of the learning part. Thus, since what is transmitted from the user terminal 2 to the server 1 is the "0", "1"-based digital data and the original specific geometry cannot be restored only with the digital data, a risk of leakage of the geometry data itself on the user terminal 2 side is eliminated even if information is leaked to a third party by hacking or the like.

Hereinabove, although an embodiment of the present invention has been described, the present invention is not limited to the above-described embodiment, and modifications, improvements, and the like made within the scope in which the object of the present invention can be achieved are considered to be included in the present invention.

For example, the functional block diagram shown in FIG. 3 is only illustrative, and is not particularly limited. In other words, it suffices that the information processing system in FIG. 3 includes functionality that can execute the above-described series of processes as a whole, and functional blocks and databases that are used to implement the functionality are not particularly limited to the example in FIG. 3.

The locations of the functional blocks and the databases are not limited to the example in FIG. 3, and may be any locations. One functional block and one database may be configured solely by using hardware, may be configured solely by using software, or may be configured by using a combination thereof.

When the processes by the individual functional blocks and the databases are configured to be executed by using software, a program included in the software is installed into a computer or the like from a network or a recording medium. The computer may be a computer embedded in dedicated hardware. The computer may be a computer that can perform various functions by installing various programs, for example, a server, as well as a general-purpose smartphone or personal computer.

A recording medium including such a program is not only configured by using a removable medium that is distributed separately from the main unit of the device in order to provide the program to each user, but also configured by using a recording medium or the like that is provided to each user in a state of being embedded in the main body of the device.

To put the foregoing another way, it suffices that the information processing device to which the present invention is applied is configured as follows, and various and diverse embodiments can be made.
(1) Specifically, an information processing system as one aspect of the present invention is an information processing system including: a first information processing device (for example, the user terminal 2 in FIG. 3, or the like) that executes part (processing up to extracting feature data from geometry data) of predetermined processing (for example, processing for obtaining a performance parameter of a three-dimensional airfoil, or analyzing the flow of an air current applied in a predetermined direction to a three-dimensional airfoil and modeling the behavior of the air current, or the like); and a second information processing device (for example, the server 1 in FIG. 3, or the like) that executes a part of a remaining processing (processing for generating the curve of a cross-section of a pseudo-geometry of the three-dimensional airfoil from the feature data, generating the performance parameter indicating the magnitude of resistance of an air current to the geometry of the cross-section, reproducing processing data that models a flow field according to the performance parameter, and modeling the flow field by applying an air current) of the predetermined processing, wherein
   the first information processing device (for example, the user terminal 2 in FIG. 3, or the like) includes a first execution section (for example, the encoding section 41 in FIG. 3, or the like) that executes the part (for example, processing for performing conversion into the feature data (see FIG. 9) obtained by conversion into features that are an array of the coordinate values of a plurality of points required to generate the curves of cross-sections DM (see FIG. 8) of a pseudo-geometry of the three-dimensional airfoil D1, or the like) of the predetermined processing, using predetermined information (for example, processing target data, such as geometry data on the three-dimensional airfoil) for input information, and outputs output information (for example, the feature data or the like) indicating an execution result thereof, in a form in which the predetermined information is unreproducible only with the output information, and
   the second information processing device (for example, the server 1 in FIG. 3, or the like) includes an acquisition section (for example, the information acquisition part 71 in FIG. 3, or the like) that acquires the output information (for example, the feature data or the like) from the first information processing device (for example, the user terminal 2 in FIG. 3, or the like), and
   a second execution section (for example, the decoder 73 in FIG. 3, or the like) that executes the part of the remaining processing (processing for generating the curve of a cross-section of a pseudo-geometry of the three-dimensional airfoil from the feature data, generating the performance parameter indicating the magnitude of resistance of an air current to the geometry of the cross-section, and modeling a flow field according to the performance parameter) of the predetermined processing, using the output information (for example, the feature data or the like) for input information. In such a case, the first information processing device (for example, the user terminal 2 in FIG. 3, or the like) executes part (for example, processing for performing conversion into feature data obtained by conversion into features that are an array of the coordinate values of a plurality of points required to generate the curves of cross-sections of a 3D model, or the like) of the predetermined processing, using predetermined information (for example, geometry data on the 3D model of an airfoil, or the like) for input information, and outputs, to the second information processing device (for example, the server 1 in FIG. 3, or the like), output information (for example, the feature data or the like) indicating an execution result thereof, in a form in which the predetermined information is unreproducible only with the output information. On the other hand, the second information processing device (for example, the server 1 in FIG. 3, or the like) executes the part of the remaining processing (processing for generating the curve of a cross-section of a pseudo-geometry of the three-dimensional airfoil from the feature data, generates a performance parameter indicating the magnitude of resistance of an air current to the geometry of the cross-section, and modeling a flow field according to the performance parameter) of the predetermined processing, using the output information (for example, the feature data or the like) for input information. A state is created in which it is impossible to restore the original specific geometry from the feature data extracted by the first information processing device (for example, the user terminal 2 in FIG. 3, or the like), so that even if the feature data is leaked to a third party by hacking or the like, there is no risk of leakage of the geometry data itself stored in the first information processing device (for example, the user terminal 2 in FIG. 3, or the like), and the part of the remaining processing of the predetermined processing can be executed by the second information processing device (for example, the server 1 in FIG. 3, or the like). Even if the geometry data is stolen at worst, the abuse of the data by a third party is also difficult unless the specifications (decoding rules or the like) of the geometry data is uncovered. As a result, while leakage of the predetermined information (processing-target data) kept by the first information processing device (for example, the user terminal 2 in FIG. 3, or the like) can be prevented, the usability of system-based processing can be improved, by the first information processing device (for example, the user terminal 2 in FIG. 3, or the like) having some processing executed by the second information processing device (for example, the server 1 in FIG. 3, or the like), and thereby reducing the burden of processing on the first information processing device (for example, the user terminal 2 in FIG. 3, or the like), or the like.
(2) Regarding an information processing device (for example, the server 1 in FIG. 6, or the like) in the one aspect of the present invention,
   it suffices that the output information (for example, the feature data or the like) from the first information processing device (for example, the user terminal 2 in FIG. 3, or the like) includes one or more pieces of feature data (features) on a target (for example, geometry data on a three-dimensional airfoil, data on a result of analyzing an air current, or the like) indicated by the predetermined information.
(3) Regarding the information processing device (for example, the server 1 in FIG. 6, or the like), it suffices that
   the part of the remaining processing (for example, processing for analyzing the flow of an air current applied in a predetermined direction to the three-dimensional airfoil and obtaining the performance parameter, or the like) of the predetermined processing includes a process of performing predetermined machine learning (a process of inputting training data into the learning model 91 and training the learning model 91), and
   the output information (for example, the feature data or the like) from the first information processing device (for example, the user terminal 2 in FIG. 3, or the like) is a result of learning at an intermediate point in the predetermined machine learning.
(4) Regarding the information processing device (for example, the server 1 in FIG. 6, or the like), it suffices that
   the predetermined machine learning is learning using a neural network including N layers (N being an integer value that is equal to or more than two), and
   the output information from the first information processing device is output information from a K-th layer (K being an integer value that is equal to or more than one and less than N) of the neural network.
(5) Regarding the information processing device (for example, the server 1 in FIG. 6, or the like),
   the predetermined processing can include a process of performing simulation (for example, a process of analyzing the flow of an air current applied in a predetermined direction to the three-dimensional airfoil and modeling the behavior (flow field) of the air current, or the like).
(6) An information processing method that is executed by an information processing system, as one aspect of the present invention, is
   an information processing method executed by an information processing system including a first information processing device (for example, the user terminal 2 in FIG. 3, or the like) that executes part of predetermined processing (for example, processing for obtaining a performance parameter of a three-dimensional airfoil, or analyzing the flow of an air current applied in a predetermined direction to a three-dimensional airfoil and modeling the behavior of the air current, or the like), and a second information processing device (for example, the server 1 in FIG. 3, or the like) that executes a part of remaining processing of the predetermined processing, and the information processing method can include: as a step that is executed by the first information processing device (for example, the user terminal 2 in FIG. 3, or the like),
   a first execution step (for example, step S11 in FIG. 4, or the like) of executing the part (for example, processing for performing conversion into feature data obtained by conversion into features that are an array of the coordinate values of a plurality of points required to generate the curves of cross-sections of a 3D model, or the like) of the predetermined processing, using predetermined information (for example, geometry data on the 3D model of an airfoil, or the like) for input information, and outputting output information indicating an execution result thereof, in a form in which the predetermined information is unreproducible only with the output information;
   as steps that are executed by the second information processing device,
   an acquisition step (for example, step S12 in FIG. 4, or the like) of acquiring the output information (for example, the feature data or the like) from the first information processing device; and
   a second execution step (for example, step S13 in FIG. 4, or the like) of executing the part of the remaining processing (processing for generating the curve of a cross-section of the 3D model from the feature data and generating the performance parameter indicating the magnitude of resistance to the geometry of the cross-section) of the predetermined processing, using the output information (for example, the feature data or the like) for input information.
(7) A program as one aspect of the present invention is a program that is applied to an information processing system including a first information processing device (for example, the user terminal 2 in FIG. 3, or the like) that executes part of predetermined processing (for example, processing for obtaining a performance parameter of a three-dimensional airfoil, or analyzing the flow of an air current applied in a predetermined direction to a three-dimensional airfoil and modeling the behavior of the air current, or the like), and a second information processing device (for example, the server 1 in FIG. 3, or the like) that executes a part of remaining processing of the predetermined processing, and the program can cause a computer (for example, the CPU 11s of the user terminal 2 in FIG. 3, or the like) controlling the first information processing device (for example, the user terminal 2 in FIG. 3, or the like) to execute a control process including
   a first execution step (for example, step S11 in FIG. 4, or the like) of executing the part (processing for generating the pseudo-curve of a cross-section of the three-dimensional airfoil from feature data and generating the performance parameter indicating the magnitude of resistance to the geometry of the cross-section) of the predetermined processing, using predetermined information (for example, geometry data on the three-dimensional airfoil, or the like) for input information, and outputting output information indicating an execution result thereof, in a form in which the predetermined information is unreproducible only with the output information, and
   the program can cause a computer (for example, the CPU 11k of the server 1 in FIG. 3, or the like) controlling the second information processing device (for example, the server 1 in FIG. 3, or the like) to execute a control process including: an acquisition step (for example, step S12 in FIG. 4, or the like) of acquiring the output information (for example, the feature data or the like) from the first information processing device; and
   a second execution step (for example, step S13 in FIG. 4, or the like) of executing the part of the remaining processing (processing for generating the pseudo-curve of a cross-section of the three-dimensional airfoil from the feature data and generating the performance parameter indicating the magnitude of resistance to the geometry of the cross-section) of the predetermined processing, using the output information (for example, the feature data or the like) for input information.

### EXPLANATION OF REFERENCE NUMERALS

1 server, 2 user terminal, 11 CPU, 12 ROM, 13 RAM, 14 bus, 15 input/output interface, 16 output unit, 17 input unit, 18 storage unit, 19 communication unit, 20 drive, 41 encoding section, 51 encoder, 52, 72 learning part, 61 decoding section, 71 information acquisition part, 73 decoder, 74 modeling part, N network

## Claims

1. An information processing system comprising: a first information processing device that executes part of predetermined processing; and a second information processing device that executes a part of remaining processing of the predetermined processing, wherein
the first information processing device includes
a first execution section that executes the part of the predetermined processing, using predetermined information for input information, and outputs output information indicating an execution result thereof, in a form in which the predetermined information is unreproducible only with the output information, and
the second information processing device includes
an acquisition section that acquires the output information from the first information processing device, and
a second execution section that executes the part of the remaining processing of the predetermined processing, using the output information for input information.

2. The information processing system according to claim 1, wherein the output information from the first information processing device includes one or more features of a target indicated by the predetermined information.

3. The information processing system according to claim 1, wherein the predetermined processing includes a process of performing predetermined machine learning, and
the output information from the first information processing device is a result of learning at an intermediate point in the predetermined machine learning.

4. The information processing system according to claim 1, wherein the predetermined machine learning is learning using a neural network including N layers (N being an integer value that is equal to or more than two), and
the output information from the first information processing device is output information from a K-th layer (K being an integer value that is equal to or more than one and less than N) of the neural network.

5. The information processing system according to claim 1, wherein the part of the remaining processing of the predetermined processing includes a process of performing simulation.

6. The information processing system according to claim 1, wherein the second information processing device is a server connected to an Internet, and
the first information processing device transmits the output information to the second information processing device via the Internet.

7. An information processing method that is executed by an information processing system, the information processing system including a first information processing device that executes part of predetermined processing, and a second information processing device that executes a part of remaining processing of the predetermined processing, the information processing method comprising:
as a step that is executed by the first information processing device,
a first execution step of executing the part of the predetermined processing, using predetermined information for input information, and outputting output information indicating an execution result thereof, in a form in which the predetermined information is unreproducible only with the output information;
as steps that are executed by the second information processing device,
an acquisition step of acquiring the output information from the first information processing device; and
a second execution step of executing the part of the remaining processing of the predetermined processing, using the output information for input information.

8. A program that is applied to an information processing system, the information processing system including a first information processing device that executes part of predetermined processing, and a second information processing device that executes a part of remaining processing of the predetermined processing,
the program causing a computer controlling the first information processing device to execute a control process comprising
a first execution step of executing the part of the predetermined processing, using predetermined information for input information, and outputting output information indicating an execution result thereof, in a form in which the predetermined information is unreproducible only with the output information, and
the program causing a computer controlling the second information processing device to execute a control process comprising:
an acquisition step of acquiring the output information from the first information processing device; and
a second execution step of executing the part of the remaining processing of the predetermined processing, using the output information for input information.
